(19) Europäisches Patentamt
European Patent Office
Office européen des brevets

(11) **EP 3 386 776 B1**

(12) **FASCICULE DE BREVET EUROPEEN**

(45) Date de publication et mention
de la délivrance du brevet:
**25.05.2022 Bulletin 2022/21**

(21) Numéro de dépôt: **16819986.7**

(22) Date de dépôt: **07.12.2016**

(51) Classification Internationale des Brevets (IPC):
***B60C 11/12*** *(2006.01)*

(52) Classification Coopérative des Brevets (CPC):
**B60C 11/1281**

(86) Numéro de dépôt international:
**PCT/FR2016/053241**

(87) Numéro de publication internationale:
**WO 2017/103379 (22.06.2017 Gazette 2017/25)**

(54) **BANDE DE ROULEMENT DE PNEUMATIQUE COMPORTANT DES INCISIONS**

REIFENLAUFFLÄCHE MIT EINSCHNITTEN

TIRE TREAD COMPRISING INCISIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2015 FR 1502583**

(43) Date de publication de la demande:
**17.10.2018 Bulletin 2018/42**

(73) Titulaire: **Compagnie Générale des Etablissements Michelin**
**63000 Clermont-Ferrand (FR)**

(72) Inventeurs:
• **BLANCHET, Etienne**
**63040 Clermont-ferrand Cedex 9 (FR)**
• **PICHOIR, Sébastien**
**63040 Clermont-ferrand Cedex 9 (FR)**

(74) Mandataire: **Boyer, Chris Michel et al**
**Manufacture Française des Pneumatiques Michelin**
**23, place des Carmes - Déchaux**
**Service juridique - Propriété Intellectuelle**
**DCJ/PI - F35 - Site de Ladoux**
**63040 Clermont-Ferrand Cedex 9 (FR)**

(56) Documents cités:
WO-A1-2010/144090      FR-A1- 2 962 373
JP-A- 2001 071 330      KR-B1- 101 038 020

## Description

### DOMAINE TECHNIQUE DE L'INVENTION

La présente invention concerne une bande de roulement de pneumatique pour véhicule automobile. Elle concerne plus particulièrement une bande de roulement de pneumatique pourvue d'incisions.

### ETAT DE LA TECHNIQUE ANTERIEURE

Le document EP1015261 décrit une sculpture pour bande de roulement et plus particulièrement une sculpture évolutive avec l'usure de la bande de roulement. En outre, selon un mode de réalisation particulier, le document présente un bloc pourvu d'un canal dont le profil est en forme de « o » ou de goutte d'eau. Ce canal communique avec une incision, qui se prolonge jusqu'à la bande de roulement. Cette incision suit un tracé formant une succession de lignes brisées. Le document FR2962373 divulgue une lamelle comprenant un corps pour mouler une incision et une tête pour mouler une zone d'élargissement. Le document KR101038020 divulgue une lamelle dont la tête comprend une pluralité de creux adaptés pour mouler des éléments de macro-rugosité dans le pneumatique.

Le document EP0564435 présente une bande de roulement pour pneumatique munie d'éléments de profilage tels que des blocs, des nervures s'étendant dans la direction périphérique, ou des configurations similaires qui sont pourvues de minces entailles de lamélisation et ou de gorges dont les régions de paroi mutuellement opposées possèdent une structure tridimensionnelle différant au moins en partie suite à la présence de bords et surfaces présentant respectivement une saillie ou un retrait, et s'étendent, au moins en partie, non parallèlement les unes des autres, dans laquelle les régions de paroi présentent principalement des éléments de surface en retrait qui forment un angle aigu par rapport à la surface de déplacement, les éléments de surface en retrait de l'une des parois étant agencés, vis à vis de la direction du tracé des entailles minces, en sens inverse de ces autres parois.

Les deux agencements préalablement décrits sont relativement complexes, et impliquent des procédés de fabrication lourds, avec des outillages coûteux.

Le document WO03033281 décrit quant à lui une bande de roulement en matériau élastomère pour pneumatique, cette bande de roulement étant pourvue d'une pluralité d'incisions, chaque incision étant délimitée par des parois en vis à vis, au moins une des parois délimitant chaque incision comporte sur toute sa surface, une rugosité moyenne comprise entre 1/100 et 1/10 de la largeur de l'incision, ladite bande de roulement comprenant au moins une des parois délimitant chaque incision présentant au moins une première série et une deuxième série de lignes de motifs en relief par rapport à ladite paroi et ayant une hauteur maximal mesurée perpendiculairement à ladite paroi au moins égale à 1/10 de la largeur, chaque série de lignes comportant une pluralité de lignes s'étendant dans une même direction chaque ligne de chaque série parcourant la surface d'un bord à un autre bord de cette surface, les lignes de la première série croisant les lignes de la deuxième série. Cette architecture vise à accroître l'effet de blocage entre les parois des incisions. Cependant, la réalisation des lignes de motifs requiert un moule complexe, avec des opérations de moulage/démoulage peu aisées et coûteuses.

Pour pallier ces différents inconvénients, l'invention prévoit différents moyens techniques.

### EXPOSE DE L'INVENTION

Tout d'abord, un premier objet de l'invention consiste à prévoir une bande de roulement pour pneumatique permettant l'optimisation des caractéristiques de freinage.

Un autre objet de l'invention consiste à prévoir une bande de roulement pour pneumatique permettant de réduire la distance de freinage sur sol enneigé.

Un autre objet de l'invention consiste à prévoir une bande de roulement pour pneumatique offrant une distance de freinage améliorée sur sol sec.

Enfin, un autre objet de l'invention consiste à prévoir une bande de roulement pour pneumatique favorisant l'évacuation de l'eau lors d'une conduite sous la pluie.

Pour ce faire, l'invention prévoit une bande de roulement de pneumatique en matériau élastomère comportant une surface de roulement destinée à venir en contact avec une chaussée pendant le roulage dudit pneumatique, ladite bande de roulement comprenant une pluralité de découpures débouchant sur la surface de roulement, chaque découpure comportant une incision délimitée par des premières parois en vis à vis et une zone d'élargissement délimitée par des secondes parois élargissant ladite incision dans la profondeur de la bande de roulement, la rugosité des premières parois étant différente de la rugosité desdites secondes parois de matières, les rugosités étant formées par des éléments de micro-rugosité.

Selon une telle architecture, la différence de rugosité entre les premières parois et les secondes parois permet l'optimisation des caractéristiques de freinage sur sol neigeux.

Selon un premier mode de réalisation, l'indice de rugosité desdites premières parois est inférieur à l'indice de rugosité desdites secondes parois. Par exemple, la rugosité correspond à un écart moyen de rugosité RA, et la rugosité RA1 des premières parois est comprise entre $0,05\mu m$ et $1\mu m$, préférentiellement entre $0,1\mu m$ et $0,3\mu m$, et la rugosité RA2 desdites secondes parois est comprise entre $4\mu m$ et $50\mu m$, préférentiellement entre $6\mu m$ à $15\mu m$.

La rugosité correspond avantageusement à une hauteur moyenne de profil Rz, et la rugosité Rz1 des premières parois est comprise entre $0.1\mu m$ et $5\mu m$ et la rugosité RA2 desdites secondes parois est comprise entre $12\mu m$ et $150\mu m$.

Selon une telle architecture, les caractéristiques de freinage sur la neige sont améliorées. En effet, l'indice de rugosité sensiblement faible des dites premières parois combiné à la présence d'un élargissement favorise un glissement de ces parois l'une contre l'autre. Lors d'un effort de freinage, ce glissement entraîne une remontée d'une des parois par rapport à l'autre, permettant d'agripper la neige et ainsi de réduire la distance de freinage.

En outre, cette architecture permet de pérenniser les caractéristiques de freinage, même lorsque les pneumatiques sont usés. En effet, lorsque les éléments de sculpture sont usés jusqu'à disparition des premières parois, les microrugosités des secondes parois permettent de stocker la neige, qui au contact de la neige au sol permet d'offrir une réduction de la distance de freinage.

Selon un second mode de réalisation, la rugosité desdites premières parois est supérieur à la rugosité desdites secondes parois.

La rugosité correspond avantageusement à un écart moyen de rugosité RA, et la rugosité RA1 des premières parois est comprise entre $4\mu m$ et $50\mu m$, préférentiellement entre $6\mu m$ et $15\mu m$, et la rugosité RA2 des secondes parois est comprise entre $0,05\mu m$ et $1\mu m$, préférentiellement entre $0,1\mu m$ et $0,3\mu m$.

La rugosité correspond avantageusement à une hauteur moyenne de profil Rz, et la rugosité Rz1 des premières parois est comprise entre $12\mu m$ et $150\mu m$ et la rugosité Rz2 desdites secondes parois est comprise entre $0.1\mu m$ et $5\mu m$.

Une telle architecture permet un meilleur freinage sur sol sec. En effet, les premières parois étant moins mobiles l'une par rapport à l'autre du fait de la rugosité sensiblement élevée, lors des efforts de freinage, les éléments de sculpture offrent une efficacité de freinage améliorée sur sol sec.

En outre lorsque le pneu est usé, la rugosité moindre des secondes parois permet une meilleure évacuation de l'eau et un freinage optimisé sur sol mouillé.

Selon une autre variante de réalisation, le profil de la zone d'élargissement est sensiblement en forme de goutte d'eau.

De manière avantageuse, la zone de transition entre les premières et les secondes parois est courbe avec un rayon de courbure inférieur à 0,5mm.

Cette transition permet d'améliorer la forme d'usure lors de l'apparition de l'élargissement sur la surface de la bande de roulement du fait de l'usure du pneumatique.

L'invention prévoit également un pneumatique comportant une bande de roulement tel que préalablement décrit.

## DESCRIPTION DES FIGURES

Tous les détails de réalisation sont donnés dans la description qui suit, complétée par les figures 1 à 4, présentées uniquement à des fins d'exemples non limitatifs, et dans lesquelles:

- la figure 1 est une vue en coupe d'une portion de bande de roulement selon l'invention ;
- la figure 2 est une vue en coupe d'une paroi comportant un indice de rugosité sensiblement élevé ;
- la figure 3 illustre le mode de mesure de la rugosité dite Rz ;
- la figure 4 illustre le mode de mesure de la rugosité dite RA.

## DESCRIPTION DETAILLEE DE L'INVENTION

### DEFINITIONS

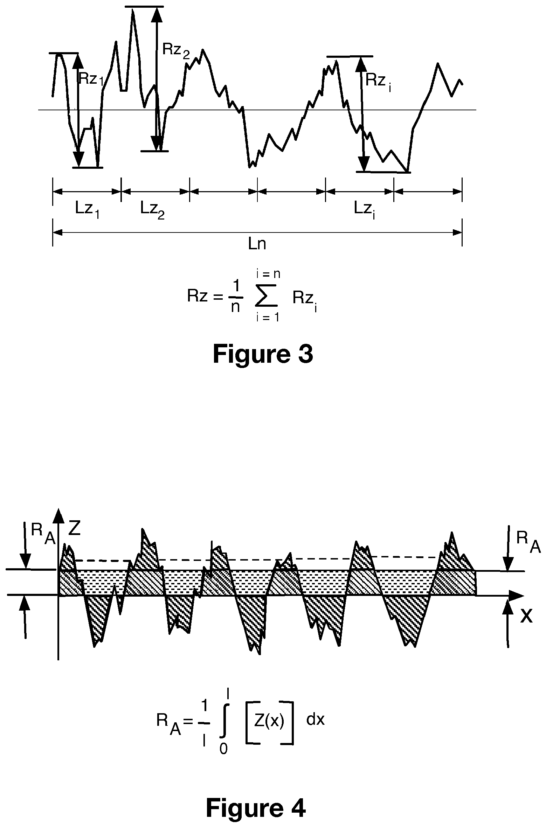

Pour calculer la rugosité Rz d'une surface, on découpe une longueur donnée de la surface à évaluer, dite longueur d'évaluation Ln, en n longueur de bases Lz de longueurs identiques, comme cela est illustré à la figure 3. Sur chacune des longueurs de base, on détermine une hauteur individuelle de profil Rzi qui est la somme de la plus grande des hauteurs de saillie et de la plus grande des profondeurs de creux du profil de la surface à l'intérieur de la longueur de base Lzi. La hauteur moyenne Rz est la moyenne arithmétique des valeurs individuelles Rzi sur l'ensemble des longueurs de bases considérées (norme DIN 4768 ; 1990), et s'exprime par la formule suivante :

$$Rz = \frac{1}{n} \sum_{i=1}^{i=n} Rz_i$$

Pour calculer la rugosité RA d'une surface, RA : est la moyenne arithmétique de toutes les ordonnées du profil à l'intérieur de la longueur de base comme cela est illustré à la figure 4, selon la formule suivante :

$$R_A = \frac{1}{l} \int_0^l \left[ Z(x) \right] dx$$

Par « pneumatique », on entend tous types de bandages élastiques soumis à une pression interne ou non.

Par « bloc » sur une bande de roulement, on entend un élément en relief délimité par des creux ou des rainures et comprenant des parois latérales et une face de contact, cette dernière étant destinée à venir en contact avec une chaussée pendant le roulage.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Une « découpure » désigne soit une rainure soit une incision et correspond à l'espace délimité par des parois de matière se faisant face et distantes l'une de l'autre d'une distance non nulle. Ce qui différencie une incision d'une rainure c'est la valeur prise par cette distance ; dans le cas d'une incision, cette distance est appropriée pour permettre la mise en contact des parois opposées lors du passage dans le contact avec la chaussée. Cette distance pour une incision est ici au plus égale à deux millimètres (mm). Dans le cas d'une rainure, les parois de cette rainure ne peuvent pas venir en contact l'une contre l'autre dans les conditions usuelles de roulage.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.

La direction principale d'une incision correspond à la direction moyenne passant par les points les plus éloignés de l'incision sur la surface de roulement de la bande à l'état neuf non usé. La direction secondaire est définie comme la direction perpendiculaire à la direction principale d'une incision et s'étendant dans l'épaisseur de la bande.

Par « rainure », on entend une découpure dont la distance entre les parois de matière est telle que ces parois ne peuvent venir en contact l'une contre l'autre dans des conditions usuelles de roulage.

Par « direction radiale », on entend une direction qui est perpendiculaire à l'axe de rotation du pneu (cette direction correspond à la direction de l'épaisseur de la bande de roulement).

Par « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la fois à la direction axiale et à la direction radiale.

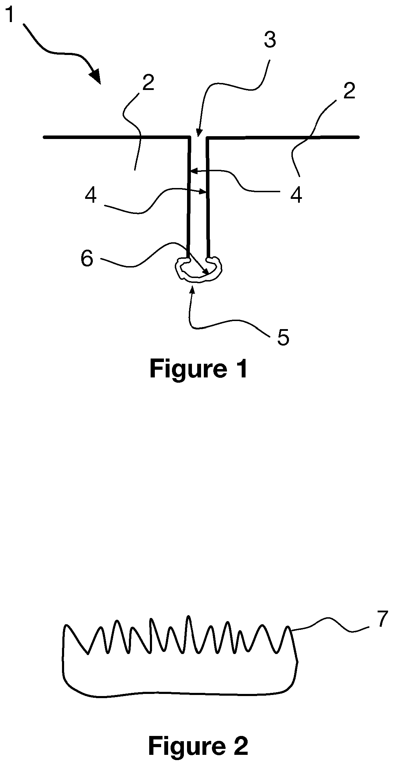

La figure 1 illustre un exemple de réalisation d'une portion agrandie d'une bande de roulement 1 de pneumatique comportant des éléments de structure 2. La bande de roulement 1 comprend une pluralité de découpures débouchant sur la surface de roulement. La coupe schématique de bande de roulement 1 de la figure 1 permet de bien mettre en évidence les zones des découpures. Ainsi, une découpure comporte une incision 3 délimitée par des premières parois 4 agencées en vis à vis, l'une face à l'autre. Ces parois 4 sont sensiblement parallèles. Dans la profondeur de la découpure, à l'opposé de la surface de roulement, la découpure comporte une zone d'élargissement 5. Cette zone d'élargissement est délimitée par des secondes parois 6, dont au moins une portion contribue à créer un élargissement de l'incision 3.

La rugosité des premières parois 4 est différente de la rugosité des secondes parois 6. Cette caractéristique se décline en plusieurs variantes. Ainsi, selon un premier mode de réalisation, la rugosité desdites premières parois 4 est inférieure à la rugosité des secondes parois 6, c'est-à-dire des parois de la zone d'élargissement 5. Dans un second mode de réalisation, la configuration est inversée, de sorte que la rugosité des premières parois 4, ou les parois de l'incision 3, est supérieure à la rugosité des secondes parois 6, soit les parois de la zone d'élargissement 5.

La figure 2 illustre de façon schématique un exemple d'éléments de microrugosités 7 telles que ceux présents dans les différentes zones de la découpure. On observe que les profils de rugosité ne sont pas uniformes. Pour apprécier les caractéristiques de rugosité de façon précise et rigoureuse, des données de rugosité RA et de rugosité Rz sont établies, en conformité avec les définitions préalablement exposées de ces deux types de mesure de rugosité.

A titre d'exemple non limitatif, des valeurs de rugosité RA et Rz sont fournies pour les premières et secondes parois, afin de bien représenter les niveaux distincts de rugosité.

Selon une première approche, la rugosité RA des parois de plus faible rugosité est comprise entre $0,05\mu m$ et $1\mu m$, et plus préférentiellement entre $0,1\mu m$ et $0,3\mu m$. La rugosité RA des parois de rugosité plus élevée est comprise entre $4\mu m$ et $50\mu m$, préférentiellement entre $6\mu m$ à $15\mu m$.

Selon une deuxième approche, la rugosité Rz des parois de plus faible rugosité est comprise entre $0.1\mu m$ et $5\mu m$, et la rugosité Rz des parois de plus grande rugosité est comprise entre $12\mu m$ et $150\mu m$.

Diverses variantes de réalisation sont également comprises dans le cadre de la présente invention. Selon un exemple de réalisation, la rugosité varie de façon sensiblement progressive entre la zone d'amorce de l'incision et la zone d'élargissement 5. Un tel agencement permet au pneumatique de bonnes performances sur un sol enneigé, tant à neuf, du fait des sculptures, qu'une fois les sculptures usées. En effet, dans ce dernier cas, la rugosité élevée de la zone d'élargissement procure l'effet d'adhérence.

Selon une autre variante de réalisation, la rugosité des parois de l'incision varie avec une alternance de zones de rugosité plus élevée, puis moins élevée, etc..., du sommet vers la base de l'incision. Cet agencement permet de bien ajuster le niveau de frottement entre les parois. Plus le bloc de gomme présente une hauteur élevée plus il peut se déformer et avoir de la mobilité. Il faut donc augmenter la rugosité sur la partie supérieure des parois pour maintenir les blocs entre eux. Une fois usé, le bloc est plus rigide et est moins soumis aux déformations et à la mobilité. Il faut donc moins de rugosité en profondeur.

Dans une variante de réalisation non limitative, la rugosité varie latéralement sur les parois des blocs de gomme.

Selon une autre variante de réalisation, on dispose des zones de rugosité plus élevée face à des zones de rugosité moins élevée. Cette disposition diminue les phénomènes d'engrènement entre faces et permet de stocker une faible quantité d'eau entre les espaces générés entre les deux faces par les différences de rugosité. Cet agencement permet d'améliorer le freinage mouillé par diminution du viscoplannage.

Toutes les combinaisons de rugosité sur une paroi d'un bloc sont possibles.

De la même manière, toutes les combinaisons de rugosité entre deux parois délimitant une incision 3 sont possibles.

Selon une autre variante de réalisation, les parois d'incision sont agencées avec une alternance de zones ondulées et de zones sensiblement planes. Selon un exemple de réalisation, les zones sensiblement planes ont une rugosité plus élevée que les zones ondulées. Un agencement inverse, avec les zones ondulées ayant une rugosité plus élevée que les zones sensiblement planes est également prévu.

Numéros de référence employés sur les figures

1     Bande de roulement
2     Éléments de sculptures
3     Incisions
4     Première paroi
5     Zone d'élargissement
6     Seconde paroi
7     Éléments de microrugosités

**Revendications**

1.  Bande de roulement (1) de pneumatique en matériau élastomère comportant une surface de roulement destinée à venir en contact avec une chaussée pendant le roulage dudit pneumatique, ladite bande de roulement comprenant une pluralité de découpures débouchant sur la surface de roulement, chaque découpure comportant :

    - une incision (3) délimitée par des premières parois (4) en vis à vis ;
    - une zone d'élargissement (5) délimitée par des secondes parois (6) élargissant ladite incision dans la profondeur de la bande de roulement ;

    **caractérisée en ce que** la rugosité des premières parois (4) est différente de la rugosité desdites secondes parois (6), les rugosités étant formées par des éléments de micro-rugosité (7).

2.  Bande de roulement (1) de pneumatique selon la revendication 1, **caractérisée en ce que** la rugosité desdites premières parois (4) est inférieure à la rugosité desdites secondes (6) parois.

3.  Bande de roulement (1) de pneumatique selon l'une des revendications 1 ou 2, **caractérisée en ce que** la rugosité correspond à un écart moyen de rugosité RA, et la rugosité RA1 des premières paroi (4) est comprise entre 0,05$\mu$m et 1 $\mu$m, préférentiellement entre 0,1$\mu$m et 0,3$\mu$m, et la rugosité RA2 desdites secondes parois (6) est comprise entre 4$\mu$m et 50$\mu$m, préférentiellement entre 6$\mu$m et 15$\mu$m.

4.  Bande de roulement (1) de pneumatique selon l'une des revendications 1 ou 2, **caractérisée en ce que** la rugosité correspond à une hauteur moyenne de profil Rz, et la rugosité Rz1 des premières parois (4) est comprise entre 0.1$\mu$m et 5$\mu$m et la rugosité RA2 desdites secondes parois (6) est comprise entre 12$\mu$m et 150$\mu$m.

5.  Bande de roulement (1) de pneumatique selon la revendication 1, **caractérisée en ce que** la rugosité des premières parois (4) est supérieure à la rugosité des secondes parois (6).

6.  Bande de roulement (1) de pneumatique selon la revendication 5, **caractérisée en ce que** la rugosité correspond à un écart moyen de rugosité RA, et la rugosité RA1 des premières parois (4) est comprise entre 4$\mu$m et 50$\mu$m, préférentiellement entre 6$\mu$m à 15$\mu$m, et la rugosité RA2 des secondes parois (6) est comprise entre 0,05$\mu$m et 1 $\mu$m, préférentiellement entre 0,1$\mu$m et 0,3$\mu$m.

7.  Bande de roulement (1) de pneumatique selon la revendication 5, **caractérisée en ce que** la rugosité correspond à une hauteur moyenne de profil Rz, et la rugosité Rz1 des premières parois (4) est comprise entre 12$\mu$m et 150$\mu$m et la rugosité Rz2 desdites secondes parois (6) est comprise entre 0.1$\mu$m et 5$\mu$m.

8.  Bande de roulement (1) de pneumatique selon l'une des revendications précédentes, **caractérisée en ce que** le profil de la zone d'élargissement (5) est sensiblement en forme de goutte d'eau.

9.  Bande de roulement (1) de pneumatique selon l'une des revendications précédentes, **caractérisée en ce que** la zone de transition entre les premières et secondes parois a un rayon inférieur à 0,5mm.

10. Pneumatique comprenant une bande de roulement (1) selon l'une des revendications 1 à 9.

## Patentansprüche

1. Reifenlaufstreifen (1) aus Elastomermaterial, der eine Lauffläche aufweist, die dazu bestimmt ist, während des Rollens des Reifens mit einer Fahrbahn in Kontakt zu gelangen, wobei der Laufstreifen eine Mehrzahl von Ausschnitten umfasst, die an der Lauffläche münden, wobei jeder Ausschnitt aufweist:

   - einen Einschnitt (3), der durch gegenüberliegende erste Wände (4) begrenzt wird;
   - einen Erweiterungsbereich (5), der durch zweite Wände (6) begrenzt wird, die den Einschnitt in der Tiefe des Laufstreifens erweitern;

   **dadurch gekennzeichnet, dass** die Rauheit der ersten Wände (4) von der Rauheit der zweiten Wände (6) verschieden ist, wobei die Rauheiten durch Mikrorauheitselemente (7) gebildet werden.

2. Reifenlaufstreifen (1) nach Anspruch 1, **dadurch gekennzeichnet, dass** die Rauheit der ersten Wände (4) kleiner als die Rauheit der zweiten Wände (6) ist.

3. Reifenlaufstreifen (1) nach einem der Ansprüche 1 oder 2, **dadurch gekennzeichnet, dass** die Rauheit einem arithmetischen Mittenrauwert RA entspricht und die Rauheit RA1 der ersten Wände (4) zwischen 0,05 $\mu$m und 1 $\mu$m, bevorzugt zwischen 0,1 $\mu$m und 0,3 $\mu$m beträgt und die Rauheit RA2 der zweiten Wände (6) zwischen 4 $\mu$m und 50 $\mu$m, bevorzugt zwischen 6 $\mu$m und 15 $\mu$m beträgt.

4. Reifenlaufstreifen (1) nach einem der Ansprüche 1 oder 2, **dadurch gekennzeichnet, dass** die Rauheit einer gemittelten Rautiefe Rz entspricht und die Rauheit Rz1 der ersten Wände (4) zwischen 0,1 $\mu$m und 5 $\mu$m beträgt und die Rauheit RA2 der zweiten Wände (6) zwischen 12 $\mu$m und 150 $\mu$m beträgt.

5. Reifenlaufstreifen (1) nach Anspruch 1, **dadurch gekennzeichnet, dass** die Rauheit der ersten Wände (4) größer als die Rauheit der zweiten Wände (6) ist.

6. Reifenlaufstreifen (1) nach Ansprüche 5, **dadurch gekennzeichnet, dass** die Rauheit einem arithmetischen Mittenrauwert RA entspricht und die Rauheit RA1 der ersten Wände (4) zwischen 4 $\mu$m und 50 $\mu$m, bevorzugt zwischen 6 $\mu$m und 15 $\mu$m beträgt und die Rauheit RA2 der zweiten Wände (6) zwischen 0,05 $\mu$m und 1 $\mu$m, bevorzugt zwischen 0,1 $\mu$m und 0,3 $\mu$m beträgt.

7. Reifenlaufstreifen (1) nach Anspruch 5, **dadurch gekennzeichnet, dass** die Rauheit einer gemittelten Rautiefe Rz entspricht und die Rauheit Rz1 der ersten Wände (4) zwischen 12 $\mu$m und 150 $\mu$m beträgt und die Rauheit Rz2 der zweiten Wände (6) zwischen 0,1 $\mu$m und 5 $\mu$m beträgt.

8. Reifenlaufstreifen (1) nach einem der vorhergehenden Ansprüche, **dadurch gekennzeichnet, dass** das Profil des Erweiterungsbereichs (5) im Wesentlichen wassertropfenförmig ist.

9. Reifenlaufstreifen (1) nach einem der vorhergehenden Ansprüche, **dadurch gekennzeichnet, dass** der Übergangsbereich zwischen den ersten und zweiten Wänden einen Radius von weniger als 0,5 mm hat.

10. Reifen mit einem Laufstreifen (1) nach einem der Ansprüche 1 bis 9.

## Claims

1. Tyre tread (1) made of elastomeric material, having a tread surface intended to come into contact with a road surface when said tyre rolls, said tread comprising a plurality of cuts opening onto the tread surface, each cut having:

   - a sipe (3) delimited by facing first walls (4);
   - a widening zone (5) delimited by second walls (6) widening said sipe in the depth of the tread;

   **characterized in that** the roughness of the first walls (4) is different from the roughness of said second walls (6), the roughness being formed of microroughness elements (7).

2. Tyre tread (1) according to Claim 1, **characterized in that** the roughness of said first walls (4) is less than the roughness of said second walls (6).

3. Tyre tread (1) according to either of Claims 1 and 2, **characterized in that** the roughness corresponds to a mean roughness deviation RA, and the roughness RA1 of the first walls (4) is between 0.05 $\mu$m and 1 $\mu$m, preferably between 0.1 $\mu$m and 0.3 $\mu$m, and the roughness RA2 of said second walls (6) is between 4 $\mu$m and 50 $\mu$m, preferably between 6 $\mu$m and 15 $\mu$m.

4. Tyre tread (1) according to either of Claims 1 and 2, **characterized in that** the roughness corresponds to a mean profile height Rz, and the roughness Rz1 of the first walls (4) is between 0.1 $\mu$m and 5 $\mu$m and the roughness RA2 of said second walls (6) is between 12 $\mu$m and 150 $\mu$m.

5. Tyre tread (1) according to Claim 1, **characterized in that** the roughness of the first walls (4) is greater than the roughness of the second walls (6).

6. Tyre tread (1) according to Claim 5, **characterized in that** the roughness corresponds to a mean roughness deviation RA, and the roughness RA1 of the first walls (4) is between 4 $\mu$m and 50 $\mu$m, preferably between 6 $\mu$m and 15 $\mu$m, and the roughness RA2 of the second walls (6) is between 0.05 $\mu$m and 1 $\mu$m, preferably between 0.1 $\mu$m and 0.3 $\mu$m.

7. Tyre tread (1) according to Claim 5, **characterized in that** the roughness corresponds to a mean profile height Rz, and the roughness Rz1 of the first walls (4) is between 12 $\mu$m and 150 $\mu$m and the roughness Rz2 of said second walls (6) is between 0.1 $\mu$m and 5 $\mu$m.

8. Tyre tread (1) according to one of the preceding claims, **characterized in that** the profile of the widening zone (5) is substantially droplet-shaped.

9. Tyre tread (1) according to one of the preceding claims, **characterized in that** the transition zone between the first and second walls has a radius of less than 0.5 mm.

10. Tyre comprising a tread (1) according to one of Claims 1 to 9.

**Figure 1**

**Figure 2**

$$Rz = \frac{1}{n} \sum_{i=1}^{i=n} Rz_i$$

**Figure 3**

$$R_A = \frac{1}{l} \int_0^l \left[ Z(x) \right] dx$$

**Figure 4**

**EP 3 386 776 B1**

## RÉFÉRENCES CITÉES DANS LA DESCRIPTION

**Documents brevets cités dans la description**

- EP 1015261 A
- FR 2962373
- KR 101038020
- EP 0564435 A
- WO 03033281 A